# EUROPEAN PATENT APPLICATION

(11) **EP 4 485 212 A1**
(43) Date of publication of application: **01.01.2025**
(21) Application number: 23215552.3
(22) Date of filing: 11.12.2023
(51) Int. Cl.: G06F 11/30, G06F 11/34, G06F 11/36

(54) **METHOD AND APPARATUS FOR PROCESSOR TRACE TRIGGER TRACING**

(30) Priority: 30.06.2023 US 202318217501
(71) Applicant: Intel Corporation, Santa Clara, CA 95054 (US)
(72) Inventor: Strong, Beeman, Portland, OR 97213 (US); Bratanov, Stanislav, Portland, OR 97215 (US); Metzger, Markus, 89075 Ulm BW (DE); Brandt, Jason W., Austin, TX 78746 (US); Jeyasingh, Stalinselvaraj, Beaverton, OR 97006 (US)
(74) Representative: Samson & Partner Patentanwälte mbB

(57) **Abstract**

Apparatus and method for a processor trace trigger tracing. A processor, comprising: a plurality of processing cores configurable as a plurality of logical processors; processor trace circuitry to perform trace operations to capture and process information related to program code executed by one or more of the logical processors; a debug unit to perform debug operations and collect debug data related to execution of the program code; a performance monitoring unit (PMU) comprising a plurality of counter registers, the PMU to collect performance data related to execution of the program code; and a plurality of trigger units, each trigger unit associated with a logical processor of the plurality of logical processors and configured to communicate trigger event data to the processor trace circuitry in response to trigger events received from at least one of the debug unit and the PMU in accordance with values of configuration bits in a corresponding trigger unit configuration register.

## Description

### BACKGROUND

### Field of the Invention

This invention relates generally to the field of computer processors. More particularly, the invention relates to a method and apparatus for processor trace trigger tracing.

### Description of the Related Art

An instruction set, or instruction set architecture (ISA), is the part of the computer architecture related to programming, including the native data types, instructions, register architecture, addressing modes, memory architecture, interrupt and exception handling, and external input and output (I/O). It should be noted that the term "instruction" generally refers herein to macro-instructions - that is instructions that are provided to the processor for execution - as opposed to micro-instructions or micro-ops - that is the result of a processor's decoder decoding macro-instructions. The micro-instructions or micro-ops can be configured to instruct an execution unit on the processor to perform operations to implement the logic associated with the macro-instruction.

The ISA is distinguished from the microarchitecture, which is the set of processor design techniques used to implement the instruction set. Processors with different microarchitectures can share a common instruction set. For example, Intel^{®} Pentium 4 processors, Intel^{®} Core^{™} processors, and processors from Advanced Micro Devices, Inc. of Sunnyvale CA implement nearly identical versions of the x86 instruction set (with some extensions that have been added with newer versions), but have different internal designs. For example, the same register architecture of the ISA may be implemented in different ways in different microarchitectures using well-known techniques, including dedicated physical registers, one or more dynamically allocated physical registers using a register renaming mechanism (e.g., the use of a Register Alias Table (RAT), a Reorder Buffer (ROB) and a retirement register file). Unless otherwise specified, the phrases register architecture, register file, and register are used herein to refer to that which is visible to the software/programmer and the manner in which instructions specify registers. Where a distinction is required, the adjective "logical," "architectural," or "software visible" will be used to indicate registers/files in the register architecture, while different adjectives will be used to designate registers in a given microarchitecture (e.g., physical register, reorder buffer, retirement register, register pool).

### BRIEF DESCRIPTION OF THE DRAWINGS

A better understanding of the present invention can be obtained from the following detailed description in conjunction with the following drawings, in which:
A better understanding of the present invention can be obtained from the following detailed description in conjunction with the following drawings, in which:
**FIG. 1** illustrates an example computer system architecture;
**FIG. 2** illustrates a processor comprising a plurality of cores;
**FIG. 3A** illustrates a plurality of stages of a processing pipeline;
**FIG. 3B** illustrates details of one embodiment of a core;
**FIG. 4** illustrates execution circuitry in accordance with one embodiment;
**FIG. 5** illustrates one embodiment of a register architecture;
**FIG. 6** illustrates one example of an instruction format;
**FIG. 7** illustrates addressing techniques in accordance with one embodiment;
**FIG. 8** illustrates one embodiment of an instruction prefix;
**FIGS. 9A-D** illustrate embodiments of how the R, X, and B fields of the prefix are used;
**FIGS. 10A-B** illustrate examples of a second instruction prefix;
**FIG. 11** illustrates payload bytes of one embodiment of an instruction prefix;
**FIG. 12** illustrates instruction conversion and binary translation implementations;
**FIG. 13** illustrates an example of processor trace logic executing processor trace instructions;
**FIG. 14** illustrates an embodiment of processor trace logic for collecting trace data;
**FIG. 15** illustrates one embodiment of a trace unit within a processor core;
**FIG. 16** illustrates one embodiment of a trigger unit coupled to debug registers and performance monitor counters;
**FIG. 17** illustrates additional details associated with trigger units of a logical processor; and
**FIG. 18** illustrates a method in accordance with one embodiment of the invention.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

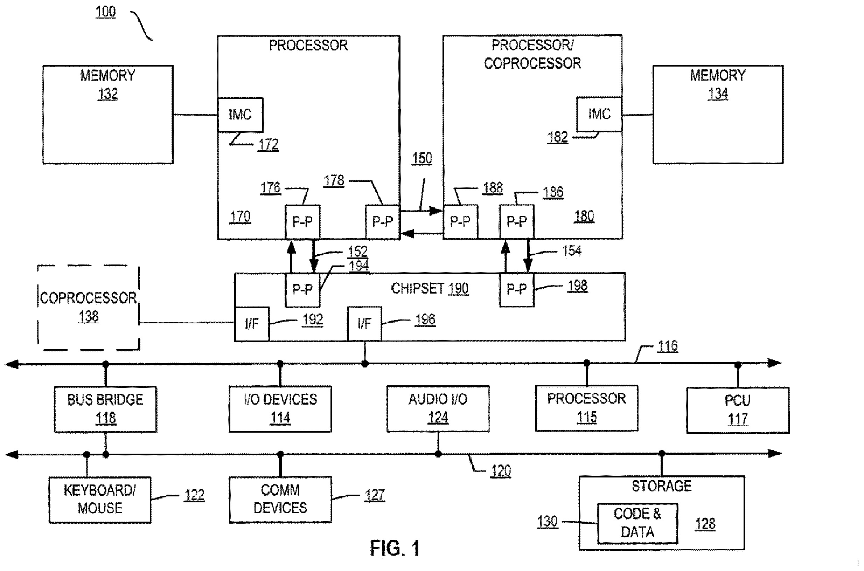

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardwarebased power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

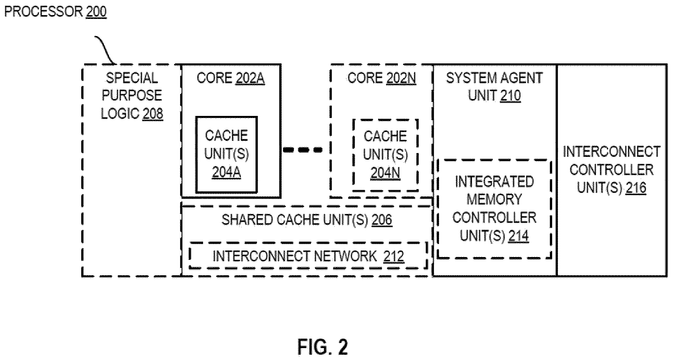

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1****.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more midlevel caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

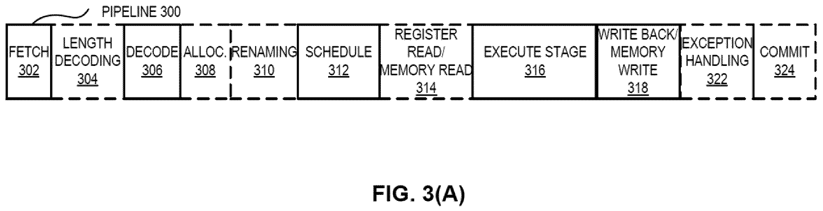

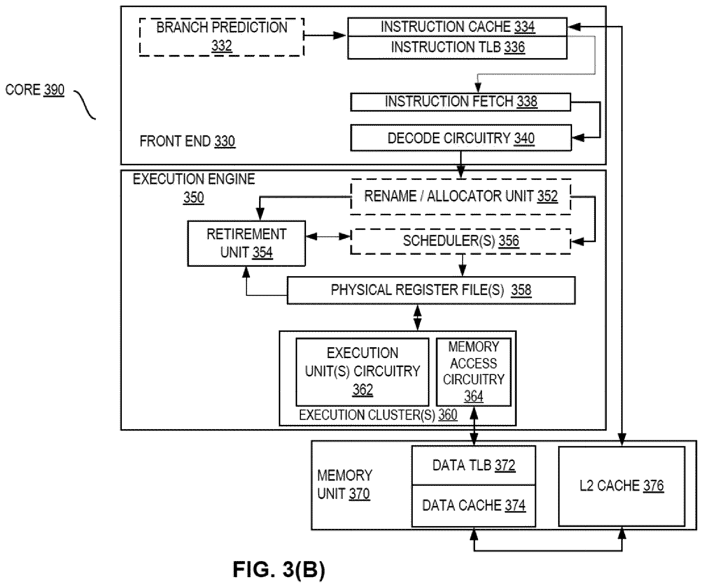

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A)****,** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

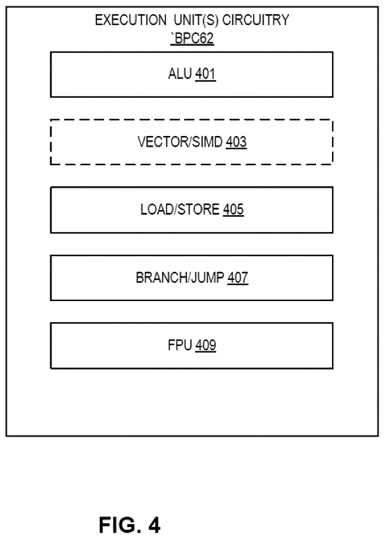

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

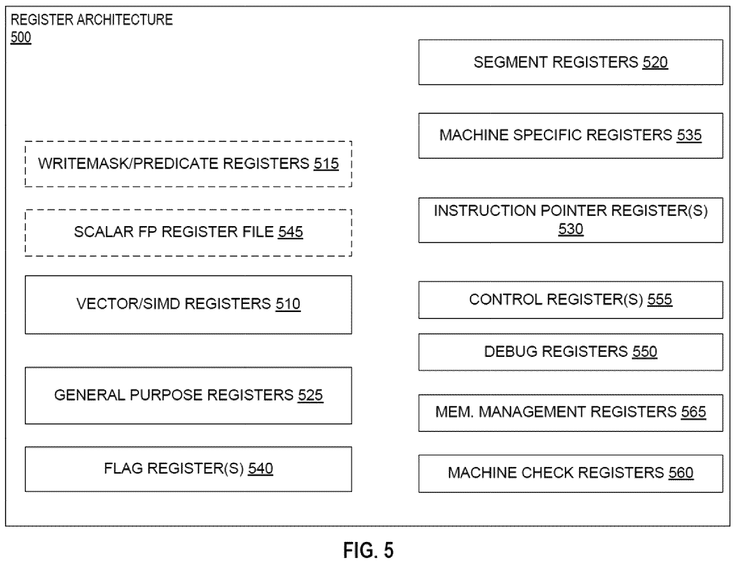

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CRO-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

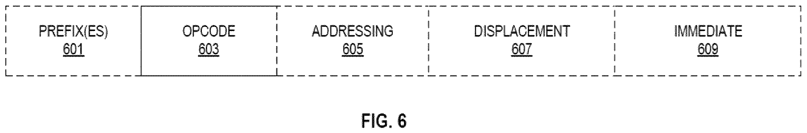

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

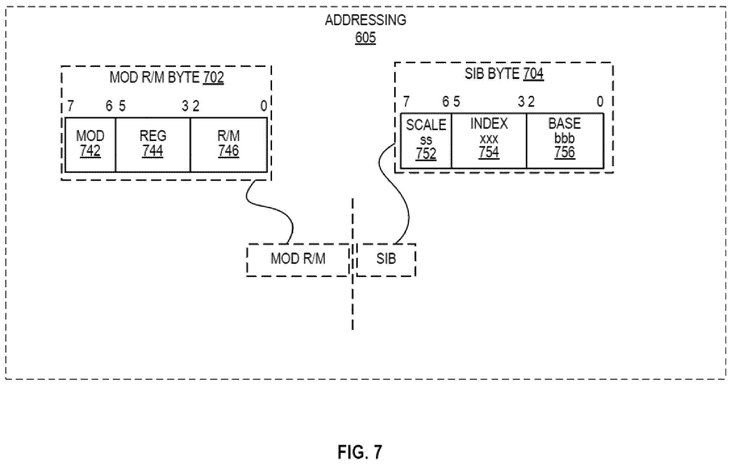

The addressing field 605 is used to address one or more operands of the instruction, such as a location in memory or one or more registers. **FIG. 7** illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

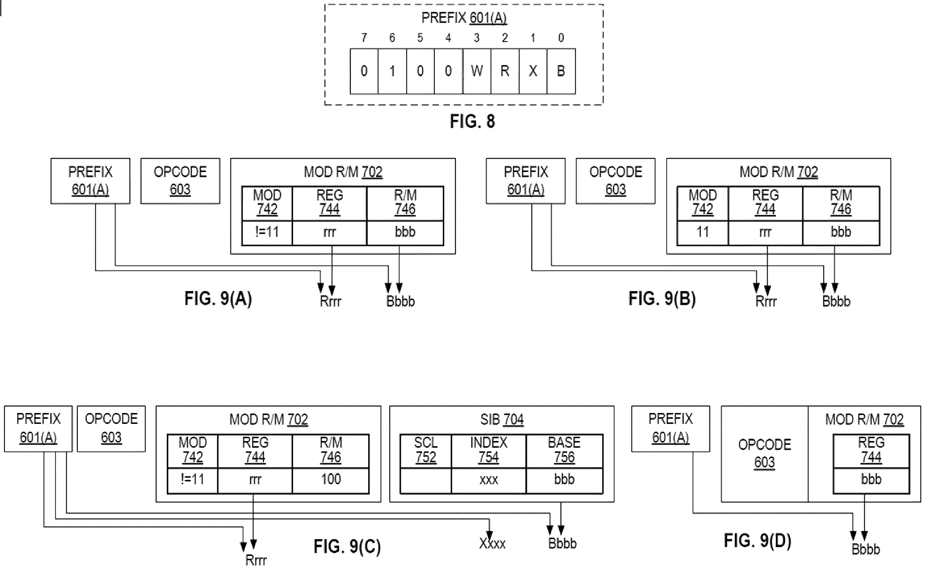

**FIG. 8** illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)****-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

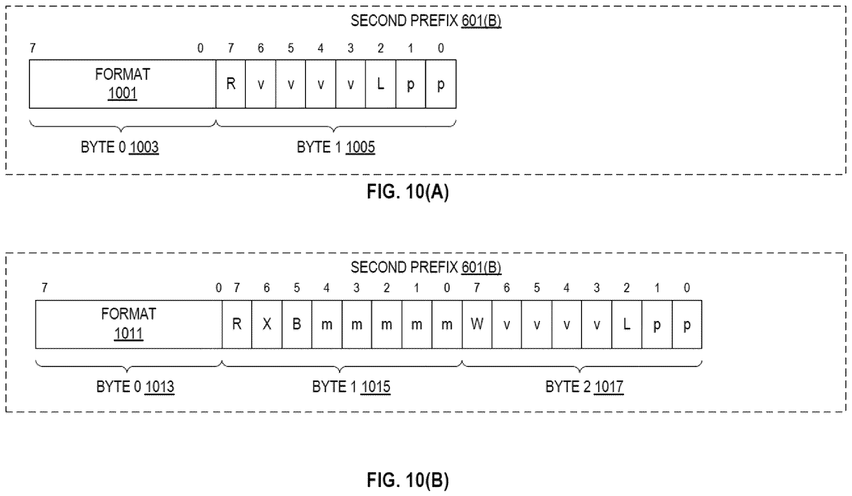

**FIGS. 10(A)****-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a OFH leading opcode, 00010 implies a OF38H leading opcode, 00011 implies a leading OF3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

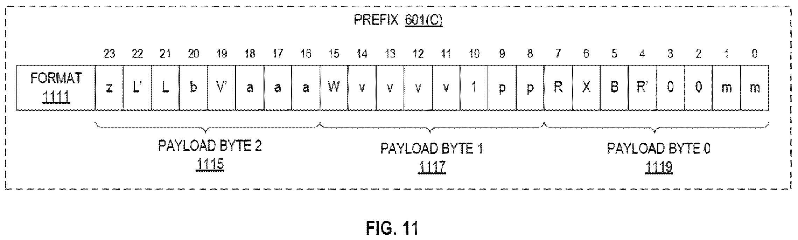

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG. 5**) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

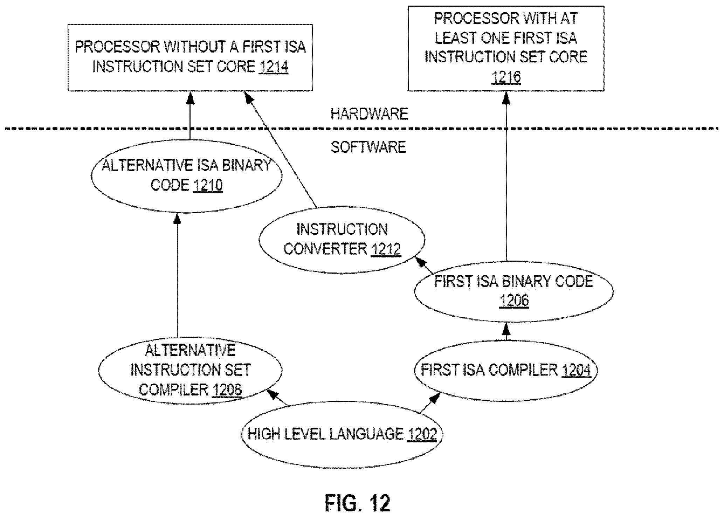

**Figure 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **Figure 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA binary code 1206 (e.g., object code) that can, with or without additional linkage processing, be executed on the processor with at least one first ISA instruction set core 1216.

Similarly, **Figure 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

### METHOD AND APPARATUS FOR PROCESSOR TRACE TRIGGER TRACING

Processors include dedicated execution tracing hardware to perform instruction flow tracing operations. For example, tracing hardware is included in x86 processors, ARM-based processors, and other types of processors, including fixed-function processors and programmable accelerators

Certain processors implement trace functionality using a combination of dedicated trace hardware and instruction set architecture (ISA) extensions capable of utilizing the trace hardware. For example, Intel^{®} Processor Trace (Intel PT) is an extension of the Intel Architecture that captures information about software execution using dedicated hardware facilities that cause only minimal performance perturbation to the software being traced. This information is collected in a variety of data packets processed by a software decoder to perform control flow tracing. The packets include timing, program flow information (e.g., branch targets, branch taken/not taken indications) and program-induced mode related information (e.g., transactional synchronization extensions (TSX) state transitions, CR3 changes). These packets may be buffered internally before being sent to the memory subsystem or other output mechanism available in the platform. Debug software can process the trace data and reconstruct the program flow. Current processor generations include support for a variety of trace sources, including sources accessed by instructions such as PTWRITE and Power Event Trace, which exposes core- and thread-level sleep states and power-down transition information to tracing functions.

Embodiments of the invention include new tracing hardware that allows new conditions and events, such as performance monitoring events, performance monitoring event overflows, and debug register matches to be used as trigger events for tracing operations. The tracing hardware is configurable to perform actions in response to these trigger events, such as pausing/resuming the trace and generating a new data packet (TRIG) related to the trigger event with IP attribution details in the trace. These new features are sometimes referred to herein as Trace Trigger Tracing (TTT).

### A. Examples of Processor Tracing

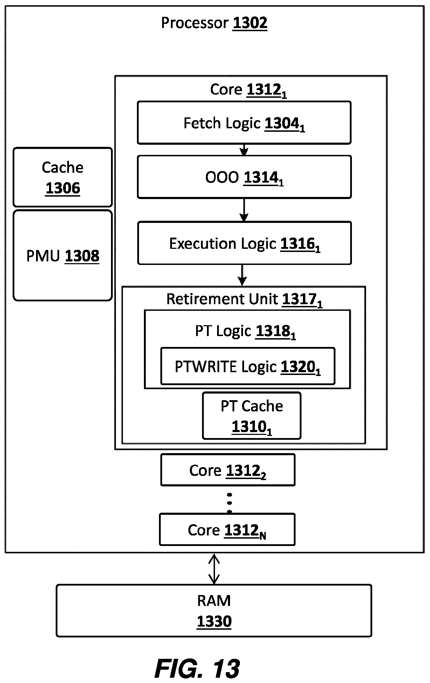

**Figure 13** is a block diagram of one embodiment of a processor 1310 and random access memory (RAM) 1330. The processor 1310 includes cache memory 1306, power management unit 1308, one or more cores 1312 i, (e.g., 1312 1, 1312 2, ... 1312 N), and may include additional logic (not shown). Core 1312 1 includes fetch logic 1304, out of order logic (OOO) 1314 1, execution logic 1316 1, and a retirement unit 1317 1 that includes PT logic 1318 1 with PTWRITE logic 1320 1. The retirement unit 1317 1 also includes processor trace (PT) cache memory 1320 1.

In operation, a program may be compiled, and executable code resulting from the compilation may be stored in RAM 1330, to be retrieved by the fetch logic 1304 and input to the OOO 1314 1 of the core 1312 1. Each instruction of the executable code may be input by the OOO 1314 1 to the execution logic 1318 1 of the core 1312 1.

The program may include zero, one, or more PTWRITE instructions, (e.g., added to an original program by a user, such as a programmer). Each PTWRITE instruction, upon execution, is to obtain an operand value of an operand specified by the PTWRITE instruction e.g., a particular data value that may be stored in a specified register, a specified memory location, or an immediate value. The operand value may be useful for debug purposes. Execution of the PTWRITE instructions is to have little to no impact on execution of other portions of the program (e.g., little or no impact on execution of the original program). That is, the PTWRITE instruction does not introduce significant latency into execution of the original program, since it simply retrieves the operand value of a specified operand.

Each data value retrieved by execution of a corresponding PTWRITE instruction may be used, along with other processor trace information, in analysis of the program, e.g., to debug the program and/or to improve execution efficiency, energy efficiency, etc. (e.g., to "tune" the program).

Within the PT logic 1320 1, PTWRITE logic 1316 1 is to detect execution of each PTWRITE instruction. For each PTWRITE instruction executed by the execution logic 1318 1, when PTWRITE is enabled the PTWRITE logic 1316 1 is to formulate a corresponding PTWRITE packet, e.g., adding a PTWRITE packet header to the operand value retrieved by the PTWRITE packet. The PTWRITE packet header may be used to identify the PTWRITE packet, e.g., distinguish from all other PT packets.

Upon execution of a (non-PTWRITE) instruction by the execution logic 1316 1, the PT logic 1320 1 may generate a processor trace packet. Each PT packet is to provide information regarding the outcome of the instruction, e.g., branch taken for a branch instruction, or other diagnostic data. For example, the PT packets to be generated by the PT logic 1314 1 may include control flow trace, data address trace, data value trace, and may also include other trace packets.

The PT logic 1320 1 may store each PTWRITE packet output by the PTWRITE logic 1316 1, along with PT packets that are generated by the PT logic 1314 1. The PT logic 1320 1 may include the PTWRITE packets in a processor trace, correlated with PT packets so that additional time-stamp correlation is unnecessary. In some embodiments, a PTWRITE packet is to include an instruction pointer (IP) of the corresponding PTWRITE instruction, and the IP can be useful to effect time correlation of the PTWRITE packet with PT packets.

The PT logic 1320 1 is to output the processor trace (PT) that includes packets generated by the PT logic 1318 1, including PTWRITE packets generated by the PTWRITE logic 1320 1. The PT may be stored, e.g., in the PT cache 1310, or the PT may be stored in RAM 1330 for long term storage that can be of use to the user during debug efforts.

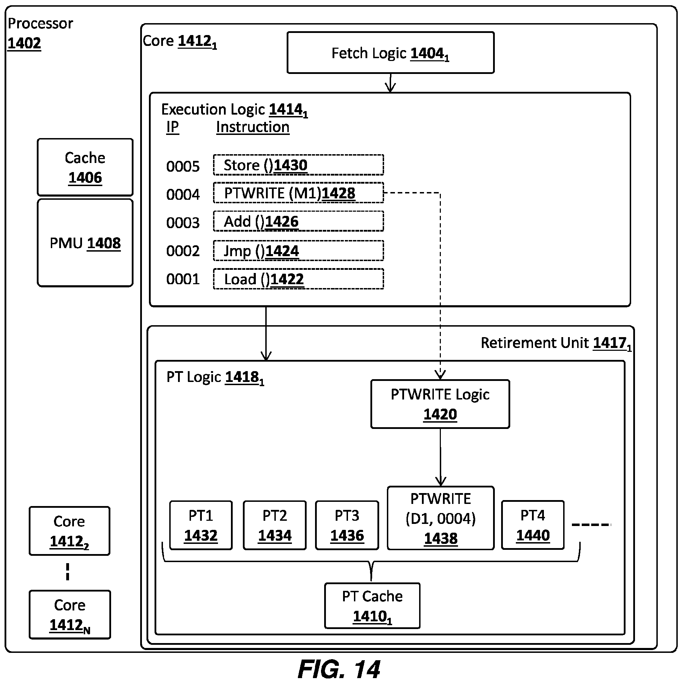

**Figure 14** is a block diagram of a processor, according to an embodiments. Processor 1400 includes cache memory 1406, power management unit 1408, and one or more cores 1412 1-1412 N. Core 1412 1 includes fetch logic 1404, execution logic 1414 1, and a retirement unit 1415 1 that includes and processor trace (PT) logic 1416 1 that includes PTWRITE logic 1420 1. The retirement unit 1415 1 also includes processor trace (PT) cache 1410.

In operation, the core 1412 1 may receive, e.g., via the fetch logic 1404, executable code, e.g., a program that has been compiled to executable code, e.g., instructions to be executed by the core 1412 1. A programmer may have included one or more PTWRITE instructions within the program, e.g., in order to retrieve operand values at particular points of execution of the program. The PTWRITE instructions can be executed "transparently," e.g., execution of an original program (e.g., prior to inclusion of any PTWRITE instructions) is substantially unaffected by execution of the PTWRITE instructions.

The execution logic 1414 1 may execute each instruction of the executable code. For example, a portion of the executable code is to include instructions 1422, 1424, 1426, 1428, and 1430. Each instruction has a corresponding instruction pointer, e.g., address that is identified with the instruction. As shown in Figure 14, instruction 1422 has IP=0001, instruction 1424 has IP=0002, instruction 1426 has IP=0003, instruction 1428 has IP=0004, and instruction 1430 has IP=0005.

As each instruction is executed, the processor trace (PT) logic 1416 1 may generate none, or one (or more) processor trace packets. The PT logic 1416 1 may generate PT packets that may include, e.g., an indication of a taken branch (direct or indirect branch) or of a branch not taken, or other outcome information based upon execution of the corresponding program instruction. In the example shown in Figure 14, executed instructions 1422, 1424, 1426, and 1430 each cause generation of a respective PT packet 1432, 1434, 1436, and 1440. Execution of the PTWRITE instruction 1428 causes retrieval of a value of operand M1 (e.g., value D1 stored at storage location M1), and triggers PTWRITE logic 120 1 to form a PTWRITE packet 1438. The PTWRITE packet 1438 is to include the value D1 stored at the storage location M1, and may optionally include the IP of the PTWRITE instruction 1428, e.g., IP=0004. The retrieved quantity D1 is to be "packetized," e.g., the PTWRITE logic 1420 1 is to include the retrieved quantity D1 in a packet and to provide a packet header that identifies the packet to be a PTWRITE packet. In some embodiments, the instruction pointer associated with the PTWRITE packet (IP=0004 in the example shown in Figure 14) is to be included in the PTWRITE packet. An order of the PT packets to be stored may correspond to the order of execution, and can indicate a chronological relationship between the operand value in the PTWRITE packet and the order of execution of non-PTWRITE instructions.

The PT logic 1420 1 may insert PTWRITE packets (produced by the PTWRITE logic 1420 1) into a processor trace that includes PT packets. The processor trace, e.g., entirety of PT packets and interleaved PTWRITE packets, is to be output to the PT cache 1410. Alternatively or subsequent to storage in the PT cache 1410, the processor trace may be stored in long term storage (e.g., RAM). The processor trace may be utilized by a programmer to analyze the program, e.g., debug, tune the program to improve execution efficiency, etc.

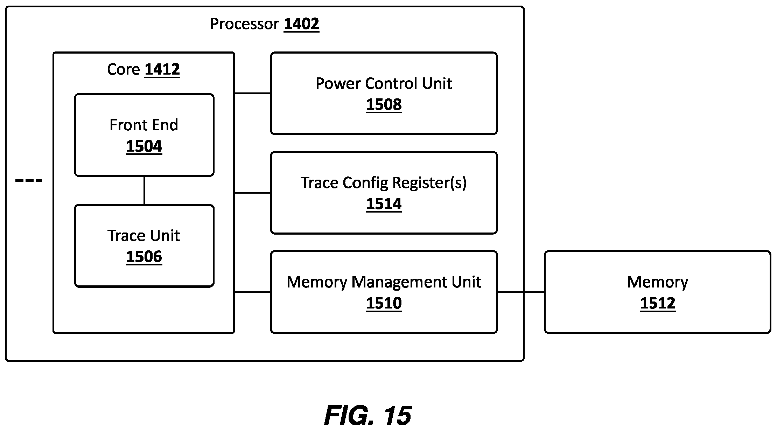

**Figure 15** illustrates additional processor trace operations performed in processor 1402. In particular, **Figure 15** illustrates selected processor elements for implementing processor core power event tracing including a core 1412 with a front end 1504 and a trace unit 1506, a power control unit 1508, a memory management unit 1510, a memory 1512, and a trace configuration register 1514. The trace unit 1506 may comprise a component of processor trace logic 1418, described above.

As noted above, mobile computing platforms, such as ultrabooks, 2:1's (laptops and tablets in one device), tablets, and smartphones, among others, may utilize batteries. Power management may be used to manage battery life in mobile computing platforms and other systems. In processor 1402, power management may involve decisions by power control unit 1508 to reduce power consumption without negatively impacting an overall performance of processor 1402. For example, power management architectures in processor 1402 may provide for different types of dormant states of processor 1402 or core 1412. The dormant states may be distinguished from a wake state by virtue of one or more measures being taken to save power. One type of dormant state may be a simple pause in the instruction pipeline where core 1412 stops executing instructions for a time, while voltage and clock frequency remain unchanged with respect to the wake state. Another type of dormant state may be a dormant state in which certain portions of processor 1402, including core 1412, are physically powered down and the processor clock is halted or set to a reduced frequency. Processor 1402 may have several levels of dormant states, which may be referred to as numbered states, beginning with a D1 state and increasing to D2, D3, D4, etc. The different levels of dormant states may offer deeper levels of power savings that result from additional portions of processor 1402 that may be powered down or other additional features of processor 1402 that may be modified for lower power consumption. Dormant states may be entered after processor 1402 leaves the wake state. In other words, processor 1402 may only execute instructions while in the wake state.

Thus, to achieve the goals of efficient power management, both processor hardware and software executing on processor 1402 may be engaged in various decisions to save power. The decisions may involve halting execution, clock modulation, clock throttling, or entering a dormant state. Dormant states may be implemented at, for example, a thread level or at a core level. For an end user of a mobile computing platform that includes processor 1402, the resulting effects of power management may have some negative impacts on usability and user experience. As expected, the different levels of dormancy in a processor may be associated with different types of latencies that may be manifested as slowdowns perceived during operation of the mobile computing platform. In many cases, very short or intermittent periods of dormancy from power management decisions on processor 1402 may not result in a perceivable change in operation of the mobile computing platform. However, such power management decisions involving imperceptible changes in dormancy in processor 1402 may have limited impact on actual power consumed by processor 1402 and the mobile computing platform. As the power management decisions made in hardware or software become more aggressive in an effort to save more power, the adverse impacts for the end user may increase.

Accordingly, a mobile computing platform including processor 1402 may reduce power using the different types of dormant states described above without impacting responsiveness and perceived operation of the mobile computing platform experienced by the end user. In particular, processor 1402 may be developed using various adjustments, tuning, and testing in different use cases and contextual situations. Some examples of undesired delays resulting from power management decisions include wakeup times from dormant states and servicing latencies for interrupts when dormant states or other power savings measures are employed, particularly when such interrupts involve end user processing tasks, such as streaming of multimedia data.

In order to deliver desirable and responsive power management algorithms, processor 1402 may include trace functionality provided by trace unit 1506 to provide a precise understanding of how power management code or power management events are being handled by processor 1402 in various operational contexts. For example, when unforeseen results are observed with a certain set of instructions that include power management commands being executed by core 1412, power management trace packets may be provided to aid in understanding which power management impacts are directly a result of the power management commands, and which power management impacts are an indirect result of the power management commands, for example, due to power management decisions being taken by power control unit 1508 (or other power management logic blocks) implemented in processor 1402. In another example, power management events may be generated by hardware autonomously. The power management events generated autonomously by hardware may affect executing code.

In given embodiments, processor 1402 may utilize a processor tracing system (PTS), which is a debugging feature that may enable exposure of an accurate and detailed trace of activity with triggering and filtering capabilities. Accordingly, trace functionality implemented by trace unit 1506, which may include certain PTS features, may have applications for functional as well as for performance debugging.

The trace functionality implemented by trace unit 1506 may include a low-overhead execution tracing feature that captures information about software execution on each hardware thread executing on core 1412 using dedicated hardware facilities so that after execution completes software can do processing of the captured trace. The captured information may be collected in data packets at trace unit 1506 included in core 1412. Although a single core 1412 having trace unit 1506 is depicted in FIG. 15 for descriptive clarity, it will be understood that each core implemented in processor 1402 may include trace functionality, for example, using a respective trace unit, such as trace unit 1506, for each core. In some embodiments, trace unit 1506 may be implemented in a backend of processor 1402. For example, trace unit 1506 may be implemented alongside a retirement unit or retirement logic. Accordingly, operations that complete and retire may generate packets that are traced with trace unit 1506.

Trace unit 1506 may generate a sequence of trace packets, which come in different types. As will be described in further detail, implementations of trace unit 1506 may provide trace packets that provide information about power management in core 1412 and in processor 1402. For example, trace unit 1506 may generate trace packets that provide a frequency ratio of different bus clocks and a time of a wake from a dormant state. Trace unit 1506 may generate trace packets that provide insight into parameters and activities of core 1412.

In accordance with embodiments of the present disclosure, processor core power event tracing may provide power management trace packets using trace unit 1506. The implementation of processor core power event tracing, in accordance with embodiments of the present disclosure, may provide capability implemented as logic blocks in a processor core, such as core 1412. In accordance with embodiments of the present disclosure, processor core power event tracing may allow additional visibility into how power decisions impact a thread's execution by exposing thread-level dormant state information as well as a limited amount of core-level dormant state information to debug complex responsiveness issues in power management.

In accordance with embodiments of the present disclosure, processor core power event tracing may provide a number of new trace packets for power management that may enable tracking of dormant state entry points (with the requested dormant state), stoppage of the pipeline clock for any reason, dormant state entries with resolved thread dormant state, dormant state exits with the exit reason and both the last and deepest core- level dormant state achieved. In some cases, packets may be generated upon wake, instead of upon entry into a given core state, as core state transitions may occur while a given thread is asleep. In one embodiment, the trace packets for power management generated by trace unit 1506 may include a dormant state request packet, a code execution stop packet, a dormant state entry packet, a dormant state exit packet, a timestamp packet, and a processor frequency packet. The trace packets for power management generated by trace unit 1506 may be activated and generated independently from other trace packets generated by trace unit 1506 and may enable improved visibility for very low bandwidth and performance impact. The trace packets for power management may enable debugging of some of the complex power management decisions made by power control unit 1508, for example. In addition to the power management trace packets, in accordance with embodiments of the present disclosure, processor core power event tracing may provide a trace configuration register 1514 for activating trace packets. Trace configuration register 1514 may include one or more separate bits for activating, independently from other trace packets generated by trace unit 1506, generation of the dormant state request packet, the code execution stop packet, the dormant state entry packet, and the dormant state exit packet.

In accordance with embodiments of the present disclosure, the dormant state request packet may indicate that core 1412 received a power management request for a particular dormant state when core 1412 is in a wake state (also referred to as an operating state). The power management request may include, for example, a software instruction received by processor 1402 or a request generated by a component of processor 1402. The component may include a component that has received input-output accesses, or an external assertion through pins in processor 1402. The request generated by a component of processor 1402 may include a hardware signal. The dormant state request packet may include an indication of the particular dormant state. In certain embodiments, the dormant state request packet may be generated each time a specific instruction is received, for example by front end 1504, and is executed to enter the requested dormant state. In particular embodiments, the dormant state request packet (DRSP) may be referred to as a DSRP trace packet and may include hint information and extension information. The hint information in the DSRP trace packet may provide information about a dormant state request command associated with the DSRP trace packet. The extension information may provide additional information, such as about the context of core 1412.

In accordance with embodiments of the present disclosure, the code execution stop packet may indicate that core 1412 stopped execution of code, for example at front end 1504. The code execution stop packet may be generated each time that a processor clock stopped. A processor clock may stop each time, for example, that a clock frequency has changed. The code execution stop packet may be associated with a subsequent event when core 1412 resumes execution of code and a core-to-bus frequency ratio trace packet is generated. The code execution stop packet may include an indication of an instruction pointer address of a processor instruction that was next to complete when the code execution stop packet was generated. In particular embodiments, the code execution stop packet (CESP) may be referred to as an CESP trace packet, which may include an instruction pointer address. The instruction pointer address included in the CESP packet may be that of the processor instruction that is next to complete when code execution was stopped when the CESP trace packet was generated.

In accordance with embodiments of the present disclosure, the dormant state entry packet may indicate that core 1412 entered a deeper dormant state from a current dormant state or from a wake state. The dormant state entry packet may accordingly be generated from all dormant states but the deepest dormant state. In particular embodiments, the dormant state entry packet (DSEP) may be referred to as a DSEP trace packet. A Dormant State Entry Source field in the DSEP trace packet may indicate whether the power state entry associated with the DSEP trace packet was hardware or software initiated. The DSEP trace packet may further include dormant state information about a thread in core 1412 associated with the DSEP trace packet.

In accordance with embodiments of the present disclosure, the dormant state exit packet may indicate (or imply) that core 1412 returned to the wake state and may indicate that front end 1504 is able to resume operation and begin executing instructions. The dormant state exit packet may accordingly be generated from all dormant states. In particular embodiments, the dormant state exit packet (DSXP) may be referred to as a DSXP trace packet. The DSXP trace packet may indicate the last dormant state of core 1412 when the DSXP trace packet was generated, as well as the deepest dormant state of core 1412 since the DSEP trace packet was generated. The DSXP trace packet may further include a wake reason for core 1412 associated with the DSEP trace packet, such as wake resulting from an interrupt, a store to a monitored memory address, or other possible sources of wake, such as by power control unit 1508.

### B. Processor Trace Trigger Tracing

Most of the trace data captured during workload execution is not of importance for software debugging or performance optimization. In some cases, such as anomaly detection, 95% of the captured trace data is discarded. Embodiments of the invention improve the efficiency of tracing use models with techniques to pause and resume trace operations based on runtime events detected during execution of the workload. By providing the ability to capture only the durations which are of interest, efficiency is vastly improved and the impact to the workload's performance is minimized. In addition, some embodiments include a new data packet which can also be used for lightweight sampling for some of the trigger events. These embodiments improve tracing efficiency and can attribute performance monitoring events to software execution with negligible impact to the workload's performance.

In particular, these implementations associate performance monitoring counters and debug breakpoint registers with the processor trace logic. In accordance with these embodiments, triggers and actions are defined that are controlled by software or firmware. For example, a trigger can be configured on a performance monitoring counter increment or counter value, an overflow condition, or a breakpoint match. In addition, a trigger action can be configured such as generation of a specific processor trace packet, referred to as a "TRIG" packet, containing relevant information and/or starting or stopping a trace.

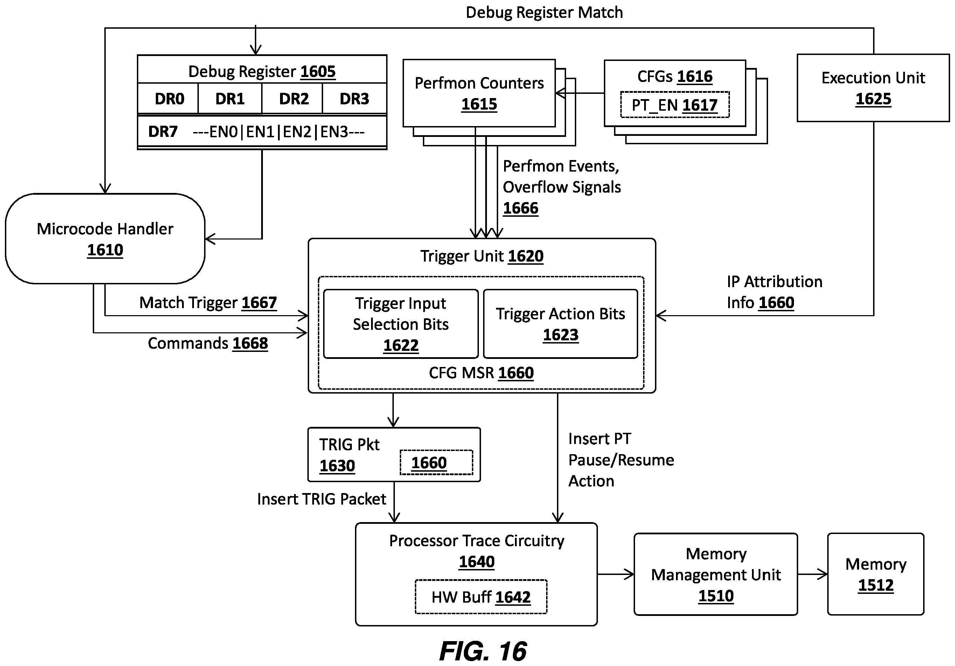

**Figure 16** illustrates processor trace circuitry in accordance with one embodiment including a trigger unit 1620 on which various trigger inputs and corresponding actions can be configured. In one implementation, each logical processor or core is associated with multiple such trigger units 1620. The presence of trigger unit capabilities, including the number of trigger units 1620, and supported inputs and actions may be enumerated by software (e.g., using the CPUID instruction on some architectures).

In one embodiment, each trigger unit 1620 includes or is associated with a configuration (CFG) model specific register (MSR) 1660 which can be programmed with values to indicate trigger inputs and corresponding trigger actions. The trigger inputs are specified by trigger input selection bits 1622 and corresponding trigger actions are indicated with trigger action bits 1623 (e.g., configured as a bitmap in one embodiment).

Embodiments of the invention integrate performance counters 1615 and/or debug registers 1605 into the processor trace functions. For example, performance counters 1615 are configured to route event messages 1666 signals to the trigger units 1620 to indicate the occurrence of performance monitoring events, such as specified counter thresholds being reached. In one embodiment, each performance monitor counter 1615 is configured via a corresponding performance monitor configuration register 1616 which includes one or more fields to specify the configuration of the performance monitoring counter 1615 (e.g., indicating the conditions for which trigger signals should be generated). An enable bit 1617 in a field of each configuration register 1616 may be set to configure the corresponding performance monitor counter 1615 to participate in the processor trace as described herein.

A set of debug registers 1605 are also configured in accordance with embodiments of the invention to generate trigger event messages 1667 which may include commands 1668 as described below. The set of debug registers 1605 control the debug operations of the processor and can be written to and read from using a variant of the move (MOV) instruction (i.e., a move to/from debug register instruction). The debug-address registers DR0-DR3 each hold a 32-bit linear address of a debug breakpoint (e.g., an address of an instruction or data object which is a focus of the debug process). The contents of debug control register DR7 further specifies breakpoint conditions. In one embodiment, a new set of enable bits are included in the debug control register DR7, one for each of the debug-address registers DR0-DR3 to enable or disable trigger messages 1667 and/or commands 1668 in response to certain address matches. For example, when enabled, a debug-address register generates a trigger message 1667 and/or command 1668 in response to an address match (e.g., when a current address matches a breakpoint address).

In some implementations, a microcode handler 1610 may be notified/initialized in response to a debug register match and may perform filtering based on the processor trace enable bits ENO-EN3. For example, in response to a breakpoint address match in one of the debug registers DRO-DR3, the microcode handler 1610 may check the corresponding enable bit ENO-EN3, respectively, to determine whether to transmit a debug register match trigger signal 1667 and/or corresponding command 1668 to the trigger unit 1620.

In one embodiment, the commands 1668 include pause trace and resume trace commands to pause or resume trace operations based on the detected breakpoint match. In response to the message 1667 and/or command 1668, the trigger unit 1620 transmits a message to the processor trace circuitry which includes trace data associated with the message 1667 and/or an indication of the command to pause or resume trace operations. In one embodiment, the trigger unit 1620 transmits a new processor trace TRIG packet 1630 into hardware buffers 1642 of the processor trace circuitry 1640 which the processor trace circuitry processes.

In one embodiment, when a trigger event occurs (e.g., such as a performance monitoring event-based trigger), the execution unit 1625 provides IP attribution information 1660 to the trigger unit 1620 which associates the IP attribution information 1660 with the corresponding event. For example, if an event 1666 indicates that a performance monitor counter threshold has been reached, the trigger unit 1620 may associate this event 1666 with a particular functional unit, IP block, or subsystem specified by the IP attribution information 1660 (e.g., such as a particular core 202A-N, execution unit integrated memory controller unit 214, special purpose logic 208, interconnect controller 216, etc).

In one embodiment, the trigger unit 1620 may include the IP attribute information 1660 (or a portion thereof) in one or more TRIG packets 1630 communicated to the processor trace circuitry 1640, which buffers/stores the corresponding trace data in hardware buffers 1642 (or other storage structure such as a cache memory). The processor trace circuitry 1640 may subsequently store the trace data to memory 1512 via the MMU 1510 from where it can be accessed via an application. For example, a processor trace decoder may be implemented which parses the trace data, including the IP attribute associations, to link trigger events to code sequences in the running workloads.

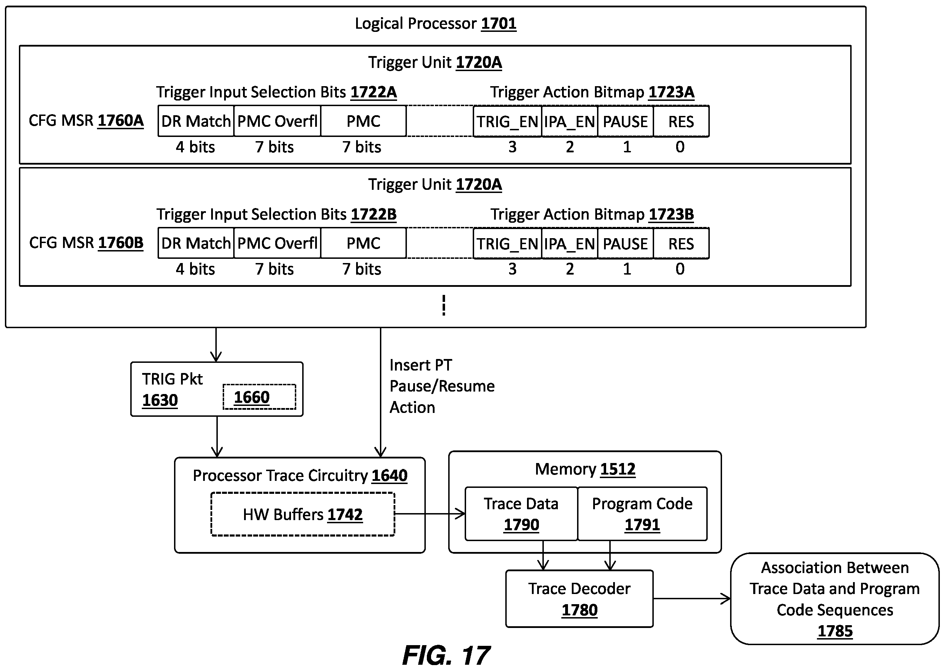

**Figure 17** illustrates additional details for trigger units 1720A-B associated with a particular logical processor 1701, which may be a core, a portion of a core, or multiple cores, depending on the configuration. Each trigger unit 1720A-B includes a configuration MSR 1760A-B, respectively, to store a set of trigger input selection bits 1722A-B and a trigger action bitmap 1723A-B.

In this specific example, the trigger input selection bits 1722A-B include 7-bit PMC field to indicate one or more performance monitoring counters/events, a 7-bit PMC overflow field to indicate one or more counter overflow values, and a 4-bit debug register match field to indicate debug registers which generate trigger events.

In one embodiment, when the conditions indicated by one or more of the trigger input selection bits 1722A-B are met, the corresponding trigger unit 1720A-B performs a trigger action as indicated by the trigger action bitmap 1723A-B. In the illustrated embodiment, each trigger action bitmap 1723A-B includes an enable bit (TRIG_EN) to indicate if any action is enabled, an IP attribution enable bit (IPA_EN) to indicate if IP attribution is enabled for the corresponding trigger event, a pause bit to indicate if the trace should be paused and a resume bit to indicate of the trace should be resumed in response to the corresponding trigger event.

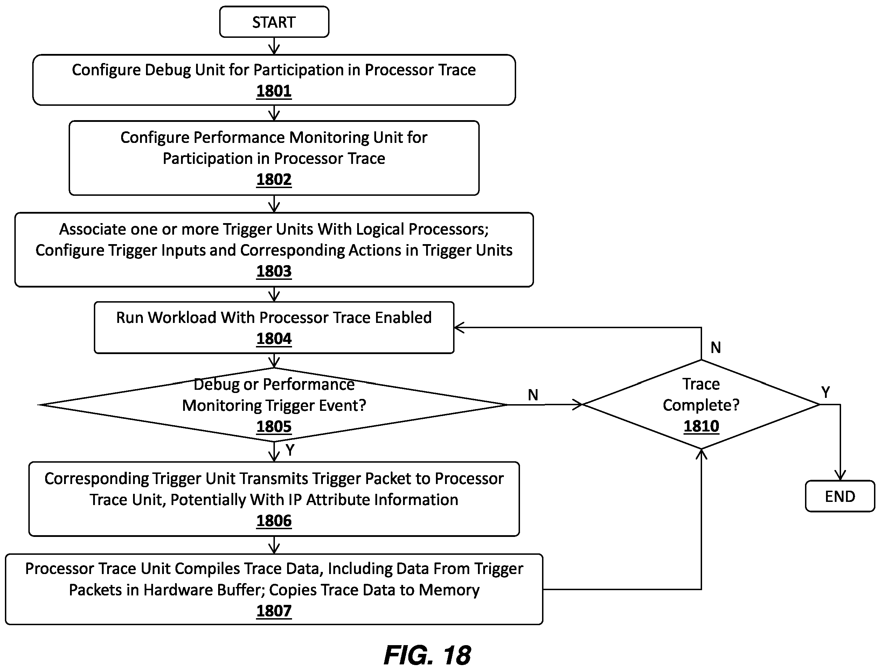

A method in accordance with one embodiment of the invention is illustrated in **Figure 18****.** The method may be implemented on the context of the architectures described above, but is not limited to any particular processor or system architecture.

At 1801, the debug unit (e.g., one or more of the set of debug registers) are configured to participate in a processor trace sequence and, at 1802, the performance monitoring unit (e.g., one or more performance monitoring counters) are configured to participate in the processor trace sequence.

At 1803, one or more trigger units are associated with logical processors and configured to indicate trigger inputs and actions. For example, a first set of fields may be set to indicate trigger inputs (including those from the debug and performance monitoring units) and a second set of fields may be set to indicate corresponding actions to be taken.

At 1804, a workload is executed with the processor trace enabled. If debug or performance monitoring trigger events are detected, determined at 1805, then at 1806 a corresponding trigger unit generates and transmits a trigger packet to the processor trace unit. As mentioned, if configured for IP attribute information, then the IP attribute information is included in the trigger packet. At 1807, the processor trace unit compiles the trace data, including the data received in response to debug and/or performance monitoring trigger events and copies the trace data to memory. When the trace is complete, determined at 1810, the process ends.

There is no existing solution which allows the performance monitoring events and debug match events to control processor trace. To achieve the same functionality, a software driver must take interrupts on those events and manage tracing. Interrupting the workload causes a noticeable performance degradation to the workload. Also, the existing methods to profile the workload takes away significant cycles away from the workload, limiting in a lower sampling frequency. Processor trace provides a hardware solution which improves the efficiency of the tracing operation and provides a very low overhead sampling method.

The embodiments of the invention allow for effective utilization of processor trace hardware features, drastically reducing the time and effort required to debug and performance-tune workloads. These embodiments can be particularly useful, for example, for anomaly detection (e.g., short periods of poor performance), for which performance monitoring on its own and processor trace on its own both have limitations.

### EXAMPLES

The following are example implementations of different embodiments of the invention.

Example 1. A processor, comprising: a plurality of processing cores configurable as a plurality of logical processors; processor trace circuitry to perform trace operations to capture and process information related to program code executed by one or more of the logical processors; a debug unit to perform debug operations and collect debug data related to execution of the program code; a performance monitoring unit (PMU) comprising a plurality of counter registers, the PMU to collect performance data related to execution of the program code; and a plurality of trigger units, each trigger unit associated with a logical processor of the plurality of logical processors and configured to communicate trigger event data to the processor trace circuitry in response to trigger events received from at least one of the debug unit and the PMU in accordance with values of configuration bits in a corresponding trigger unit configuration register.

Example 2. The processor of example 1 wherein the configuration bits comprise a plurality of trigger input selection bits to indicate the trigger events for which a trigger action is to be performed and a plurality of trigger action bits to indicate actions to be performed in response to the corresponding trigger events.

Example 3. The processor of examples 1 or 2 wherein the trigger unit is to associate attribution information indicating a particular intellectual property (IP) block, functional unit, or set of functional units with particular types of trigger events.

Example 4. The processor of any of examples 1-3 wherein the trigger unit is to generate a trigger packet containing an indication of at least one trigger event and, if applicable, the attribution information, the trigger unit to transmit the trigger packet to the processor trace circuitry.

Example 5. The processor of any of examples 1-4 wherein upon receipt of a first trigger event, the trigger unit is to transmit a message to the processor trace circuitry indicating a trace pause action or a trace resume action based on a value of one or more of the plurality of trigger action bits, wherein the processor trace circuitry is to responsively pause or resume the trace operations.

Example 6. The processor of any of examples 1-5 wherein the debug unit further comprises: a plurality of debug registers, each debug register to store an address associated with debug operations; and a debug control register to store a plurality of bit values indicating which debug registers are to cause a trigger event to be transmitted to the trigger unit in response to a result of an address comparison with the address associated with debug operations.

Example 7. The processor of any of examples 1-6 wherein, responsive to the plurality of bit values, a microcode handler is to determine whether the trigger event is to be transmitted to the trigger unit.

Example 8. The processor of any of examples 1-7 further comprising: a plurality of PMU configuration registers, each PMU configuration register associated with a counter register of the plurality of counter registers and configured to store a bit value to indicate whether performance monitoring events associated with the corresponding counter register are to cause a trigger event to be transmitted to the trigger unit.

Example 9. A method comprising: indicating a plurality of logical processors; performing trace operations by processor trace circuitry to capture and process information related to program code executed by one or more of the logical processors; performing debug operations by a debug unit including collecting debug data related to execution of the program code; collecting performance data related to execution of the program code by a performance monitoring unit (PMU) comprising a plurality of counter registers; and communicating, by a trigger unit of a plurality of trigger units, trigger event data to the processor trace circuitry in response to trigger events received from at least one of the debug unit and the PMU in accordance with values of configuration bits in a corresponding trigger unit configuration register.

Example 10. The method of example 9 wherein the configuration bits comprise a plurality of trigger input selection bits to indicate the trigger events for which a trigger action is to be performed and a plurality of trigger action bits to indicate actions to be performed in response to the corresponding trigger events.

Example 11. The method of examples 9 or 10 further comprising: associating, by the trigger unit, attribution information indicating a particular intellectual property (IP) block, functional unit, or set of functional units with particular types of trigger events.

Example 12. The method of any of examples 9-11 further comprising: generating, by the trigger unit, a trigger packet containing an indication of at least one trigger event and, if applicable, the attribution information, the trigger unit to transmit the trigger packet to the processor trace circuitry.

Example 13. The method of any of examples 9-12 wherein upon receipt of a first trigger event, the trigger unit transmits a message to the processor trace circuitry indicating a trace pause action or a trace resume action based on a value of one or more of the plurality of trigger action bits, wherein the processor trace circuitry is to responsively pause or resume the trace operations.

Example 14. The method of any of examples 9-13 further comprising: storing a plurality of addresses associated with debug operations in a plurality of debug registers; and storing in a debug control register a plurality of bit values indicating which debug registers of the plurality of debug registers are to cause a trigger event to be transmitted to the trigger unit in response to a result of an address comparison with the address associated with debug operations.

Example 15. The method of any of examples 9-14 wherein, responsive to the plurality of bit values, a microcode handler is to determine whether the trigger event is to be transmitted to the trigger unit.

Example 16. The method of any of examples 9-15 further comprising: storing a bit value to indicate whether performance monitoring events associated with a corresponding counter register are to cause a trigger event to be transmitted to the trigger unit.

Example 17. A machine-readable medium having program code stored thereon which, when executed by a machine, causes the machine to perform operations, comprising: indicating a plurality of logical processors; performing trace operations by processor trace circuitry to capture and process information related to program code executed by one or more of the logical processors; performing debug operations by a debug unit including collecting debug data related to execution of the program code; collecting performance data related to execution of the program code by a performance monitoring unit (PMU) comprising a plurality of counter registers; and communicating, by a trigger unit of a plurality of trigger units, trigger event data to the processor trace circuitry in response to trigger events received from at least one of the debug unit and the PMU in accordance with values of configuration bits in a corresponding trigger unit configuration register.

Example 18. The machine-readable medium of example 17 wherein the configuration bits comprise a plurality of trigger input selection bits to indicate the trigger events for which a trigger action is to be performed and a plurality of trigger action bits to indicate actions to be performed in response to the corresponding trigger events.

Example 19. The machine-readable medium of examples 17 or 18 further comprising: associating, by the trigger unit, attribution information indicating a particular intellectual property (IP) block, functional unit, or set of functional units with particular types of trigger events.

Example 20. The machine-readable medium of any of examples 17-19 further comprising: generating, by the trigger unit, a trigger packet containing an indication of at least one trigger event and, if applicable, the attribution information, the trigger unit to transmit the trigger packet to the processor trace circuitry.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. A processor, comprising:
a plurality of processing cores configurable as a plurality of logical processors;
processor trace circuitry to perform trace operations to capture and process information related to program code executed by one or more of the logical processors;
a debug unit to perform debug operations and collect debug data related to execution of the program code;
a performance monitoring unit (PMU) comprising a plurality of counter registers, the PMU to collect performance data related to execution of the program code; and
a plurality of trigger units, each trigger unit associated with a logical processor of the plurality of logical processors and configured to communicate trigger event data to the processor trace circuitry in response to trigger events received from at least one of the debug unit and the PMU in accordance with values of configuration bits in a corresponding trigger unit configuration register.

2. The processor of claim 1 wherein the configuration bits comprise a plurality of trigger input selection bits to indicate the trigger events for which a trigger action is to be performed and a plurality of trigger action bits to indicate actions to be performed in response to the corresponding trigger events.

3. The processor of claim 1 or 2 wherein the trigger unit is to associate attribution information indicating a particular intellectual property (IP) block, functional unit, or set of functional units with particular types of trigger events.

4. The processor of claim 3 wherein the trigger unit is to generate a trigger packet containing an indication of at least one trigger event and, if applicable, the attribution information, the trigger unit to transmit the trigger packet to the processor trace circuitry.

5. The processor of any of claims 2 to 4 wherein upon receipt of a first trigger event, the trigger unit is to transmit a message to the processor trace circuitry indicating a trace pause action or a trace resume action based on a value of one or more of the plurality of trigger action bits, wherein the processor trace circuitry is to responsively pause or resume the trace operations.

6. The processor of any of claims 1 to 5 wherein the debug unit further comprises:
a plurality of debug registers, each debug register to store an address associated with debug operations; and
a debug control register to store a plurality of bit values indicating which debug registers are to cause a trigger event to be transmitted to the trigger unit in response to a result of an address comparison with the address associated with debug operations.

7. The processor of claim 6 wherein, responsive to the plurality of bit values, a microcode handler is to determine whether the trigger event is to be transmitted to the trigger unit.

8. The processor of any of claims 1 to 7 further comprising:
a plurality of PMU configuration registers, each PMU configuration register associated with a counter register of the plurality of counter registers and configured to store a bit value to indicate whether performance monitoring events associated with the corresponding counter register are to cause a trigger event to be transmitted to the trigger unit.

9. A method comprising:
performing trace operations by processor trace circuitry to capture and process information related to program code executed by one or more logical processors;
performing debug operations by a debug unit including collecting debug data related to execution of the program code;
collecting performance data related to execution of the program code by a performance monitoring unit (PMU) comprising a plurality of counter registers; and
communicating, by a trigger unit of a plurality of trigger units, trigger event data to the processor trace circuitry in response to trigger events received from at least one of the debug unit and the PMU in accordance with values of configuration bits in a corresponding trigger unit configuration register.

10. The method of claim 9 wherein the configuration bits comprise a plurality of trigger input selection bits to indicate the trigger events for which a trigger action is to be performed and a plurality of trigger action bits to indicate actions to be performed in response to the corresponding trigger events.

11. The method of claim 9 or 10 further comprising:
associating, by the trigger unit, attribution information indicating a particular intellectual property (IP) block, functional unit, or set of functional units with particular types of trigger events.

12. The method of claim 11 further comprising:
generating, by the trigger unit, a trigger packet containing an indication of at least one trigger event and, if applicable, the attribution information, the trigger unit to transmit the trigger packet to the processor trace circuitry.

13. The method of any of claims 10 to 12 wherein upon receipt of a first trigger event, the trigger unit transmits a message to the processor trace circuitry indicating a trace pause action or a trace resume action based on a value of one or more of the plurality of trigger action bits, wherein the processor trace circuitry is to responsively pause or resume the trace operations.

14. The method of any of claims 9 to 14 further comprising:
storing a plurality of addresses associated with debug operations in a plurality of debug registers; and
storing in a debug control register a plurality of bit values indicating which debug registers of the plurality of debug registers are to cause a trigger event to be transmitted to the trigger unit in response to a result of an address comparison with the address associated with debug operations.

15. A machine-readable medium having program code stored thereon which, when executed by a machine, causes the machine to perform operations, comprising:
indicating a plurality of logical processors;
performing trace operations by processor trace circuitry to capture and process information related to program code executed by one or more of the logical processors;
performing debug operations by a debug unit including collecting debug data related to execution of the program code;
collecting performance data related to execution of the program code by a performance monitoring unit (PMU) comprising a plurality of counter registers; and
communicating, by a trigger unit of a plurality of trigger units, trigger event data to the processor trace circuitry in response to trigger events received from at least one of the debug unit and the PMU in accordance with values of configuration bits in a corresponding trigger unit configuration register.
